# EUROPEAN PATENT APPLICATION

(11) **EP 3 742 379 A1**
(43) Date of publication of application: **25.11.2020**
(21) Application number: 18906486.8
(22) Date of filing: 16.02.2018
(51) Int. Cl.: G06Q 40/02, G06Q 30/02, G06Q 20/02, G06Q 20/12, G06Q 20/32

(54) **MOBILE TERMINAL DEVICE AND SERVICE PROVIDING SYSTEM**

(71) Applicant: Nishimura, Noboru, Tokyo 150-0002 (JP)
(72) Inventor: Nishimura, Noboru, Tokyo 150-0002 (JP)
(74) Representative: D Young & Co LLP
(86) International application number: PCT/JP2018/005491
(87) International publication number: WO 2019/159322

(57) **Abstract**

The present disclosure provides a technique that allows transactions to be performed between a user (consumer) and a company without the personal information of the user being disclosed at all until the user concludes a contract with the company. The service providing system according to the present disclosure includes a management server that provides a service site, a portable terminal device that computes the individual rating score of the user and sends the score to the management server, and a server of a company that uploads to the service site of the management server information on services or goods of the company to be provided to the user. In the system, the management server discloses the individual rating score of the user without disclosing the personal information of the user on the service site, and permits access to the individual rating score from the server of the company. The server of the company accesses the management server to obtain the individual rating score of the user, determines the contents of services or goods to be provided to user on the basis of the individual rating score, and sends an offer to provide the services or goods to the management server (see Fig. 1).

## Description

### Technical Field

The present disclosure relates to portable terminal devices and service providing systems.

### Background Art

In recent years, systems that provide various goods mail-order services or consumer finance services have been proposed. For example, Patent Literature 1 discloses a system in which a user provides his/her personal information as well as loan request conditions to a system server from his/her portable terminal, and a consumer finance company tenders bids for financing auction information on the basis of the loan request conditions. According to the invention disclosed in Patent Literature 1, the personal information of the user is provided only to the system. It also describes that, therefore, the personal information of the user can be protected.

### Citation List

### Patent Literature

Patent Literature 1: JP 2004-21619 A

### Summary of Invention

### Technical Problem

However, in Patent Literature 1, the user has to provide very specific personal information, including his/her name, mail address, date of birth, and history of debt to other companies, for example, to the system server that provides services. Even though the user need not directly provide such specific personal information to the consumer finance company, should the user provide such specific personal information to the system, the user is still concerned that his/her personal information may possibly be not treated properly. Therefore, construction of a more secure service system is desired.

The present disclosure has been made in view of the foregoing circumstances, and provides a technique that allows transactions between a user (i.e., consumer) and a company to be performed without the personal information of the user being disclosed at all until the user concludes a contract with the company.

### Solution to Problem

In order to solve the aforementioned problems, a portable terminal device in accordance with the present disclosure includes a communication unit used to access a network, a storage unit that stores various programs, and a processor that reads a predetermined program from the storage unit and executes the program. The processor is configured to execute a process of setting a core account within the storage unit of the portable terminal device, a process of accessing a server of a financial company contracted by a user of the portable terminal device using the communication unit, setting a link between the core account and a financial account of the user provided in the financial company, directly depositing money into the core account from the financial account or directly withdrawing money from the core account to transfer it to the financial account, and storing information on the deposited/withdrawn money or balance of the core account into the storage unit of the portable terminal device, a process of obtaining from the server of the financial company information on the deposited/withdrawn money or balance of the financial account of the user, and storing the information into the storage unit of the portable terminal device, a process of computing an individual rating score of the user on the basis of at least the information on the deposited/withdrawn money or balance of the core account and the information on the deposited/withdrawn money or balance of the financial account, a process of sending the computed individual rating score to a management server for managing a predetermined service site, and a process of accessing the management server to obtain information on a service to be provided on the basis of the individual rating score.

In addition, a service providing system according to the present disclosure includes the aforementioned portable terminal device, a management server that provides the service site, and a server of a company that uploads to the service site of the management server information on services or goods of the company to be provided to the user. In the system, the management server discloses the individual rating score of the user without disclosing the personal information of the user on the service site, and permits access to the individual rating score from the server of the company. In addition, the server of the company accesses the management server to obtain the individual rating score of the user, determines the contents of services or goods to be provided to the user on the basis of the individual rating score, and sends an offer to provide the services or goods to the management server.

Further features related to the present disclosure will become apparent from the description of this specification and the accompanying drawings. In addition, the configurations of the present disclosure can be implemented by elements, various combinations of the elements, and the configurations in the following detailed description and the claims.

The description of this specification contains only typical illustrative examples, and it should be understood that the scope or examples of the application of the claims should not be limited in any sense.

### Advantageous Effects of Invention

According to the present disclosure, transactions between a user (i.e., consumer) and a company can be performed securely.

### Brief Description of Drawings

Fig. 1 illustrates an exemplary overall configuration of a service providing system 1 that manages various services and provides the various services to users according to the present embodiment.
Fig. 2 illustrates an exemplary internal configuration of each of portable terminals 10_1 to 10_n of users 1 and n.
Fig. 3 illustrates an exemplary internal configuration of a management server 20.
Fig. 4 illustrates an exemplary internal configuration of each of servers 30_1 to 30_n of loan providing companies 1 to n.
Fig. 5 illustrates the internal configuration of each of servers 40_1 to 40n of online sales companies 1 to n and servers 50_1 to 50_n and 60_1 to 60_n of other services-A-to-X-providing companies 1 to n.
Fig. 6 is a flowchart for illustrating the operation of a core application executed on each of the portable terminals 10_1 to 10_n of the users.
Fig. 7 is a flowchart for illustrating a process executed by the management server 20.
Fig. 8 illustrates an exemplary configuration of an individual rating score table 800 of each user that is disclosed to each company on a browse page, which is dedicated to a goods/service providing company, on a service site.
Fig. 9 illustrates an exemplary configuration of a user's dedicated browse page (i.e., personal page; a browse page dedicated to a specific user) that can be viewed by each user (i.e., owner of each of the portable terminals 10_1 to 10_n).

### Description of Embodiments

Hereinafter, embodiments and examples of the present disclosure will be described with reference to the accompanying drawings. In the drawings, elements with the same functions may be denoted by the same reference numerals. Although the accompanying drawings illustrate specific embodiments and implementations in accordance with the principle of the present disclosure, they are for understanding of the present disclosure and should never be used to narrowly construe the present disclosure.

Although the present embodiment contains fully detailed descriptions for those skilled in the art to implement the present disclosure, it should be understood that other implementations and embodiments are also possible, and changes to the configuration or structure as well as replacement of various elements is possible without departing from the spirit or scope of the technical idea of the present disclosure. Therefore, the present disclosure should not be construed by being limited to the following descriptions.

### <Exemplary overall configuration of system>

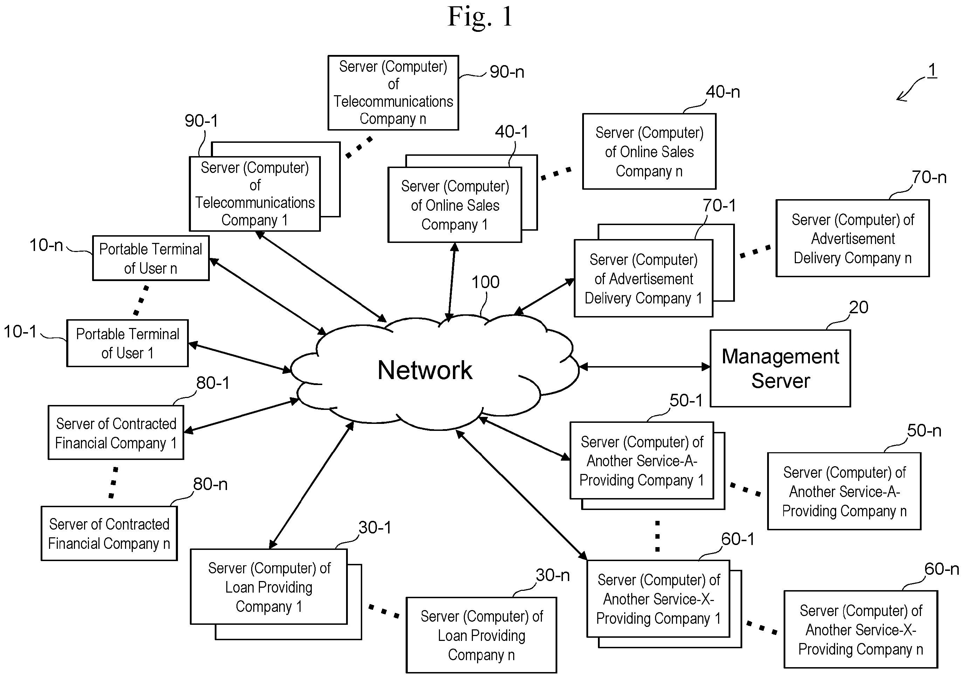

Fig. 1 illustrates an exemplary overall configuration of a service providing system 1 that manages various services and provides the various services to users according to the present embodiment.

The service providing system 1 includes portable terminals (which may also be fixed-line terminals) 10_1 to 10_n, each of which is held or owned by a user and which accesses a network when operated by the user; a management server 20 that manages information or data (which includes individual rating scores described below) sent from the portable terminals 10_1 to 10_n of the users 1 to n, and information or data sent from servers of various companies, and manages services provided by the various companies; servers 30_1 to 30_n of loan providing companies 1 to n, each of which determines loan conditions (which include information such as an loan amount and a repayment period) for the relevant user on the basis of the individual rating score provided by the management server 20, and sends the loan conditions to the management server 20; servers 40_1 to 40_n of online sales companies 1 to n, each of which determines a group of goods matching the relevant user (with high possibility) on the basis of the individual rating score provided by the management server 20, generates an offer for the user, and sends the offer to the management server 20; servers 50_1 to 50_n and 60_1 to 60_n of other services-A-to-X (e.g., complete medical checkup introducing services and human resource providing services)-providing companies 1 to n, each of which determines various services matching the relevant user (with high possibility) on the basis of the individual rating score provided by the management server 20, generates an offer for the user, and sends the offer to the management server 20; servers 70_1 to 70_n of advertisement delivery companies 1 to n, each of which determines an advertisement matching the relevant user (with high possibility) on the basis of the individual rating score provided by the management server 20 and sends information on the advertisement to the management server 20; servers 80_1 to 80_n of financial companies 1 to n, such as banks, that are contracted by the users 1 to n; and servers 90_1 to 90_n of telecommunications companies 1 to n, each of which is accessed by each service providing company on the basis of information that identifies one of the portable terminals 10_1 to 10_n of the users provided by the management server 20 so that each service providing company obtains from the server information on the debit account for payment of communication charges for the telecommunications company contracted by the user for the portable terminal. All of them are connected over a network 100.

### <Exemplary internal configuration of each constituent element of system>

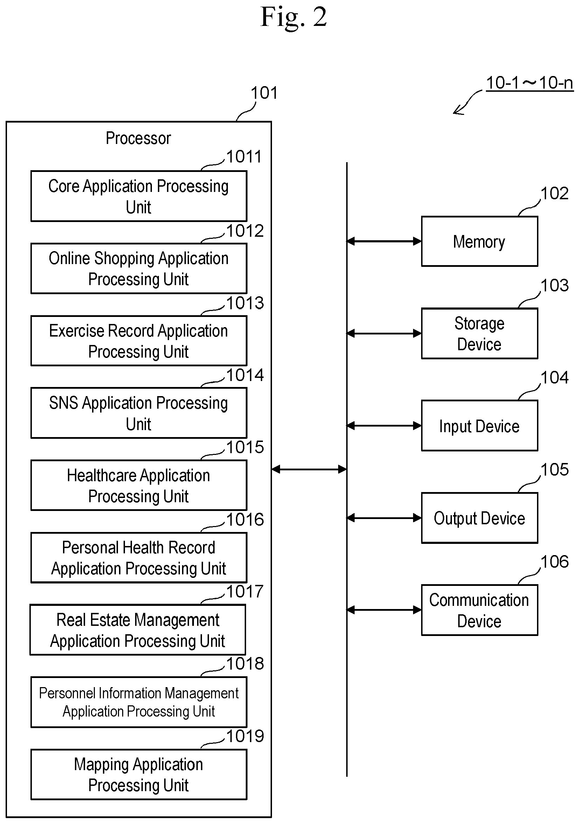

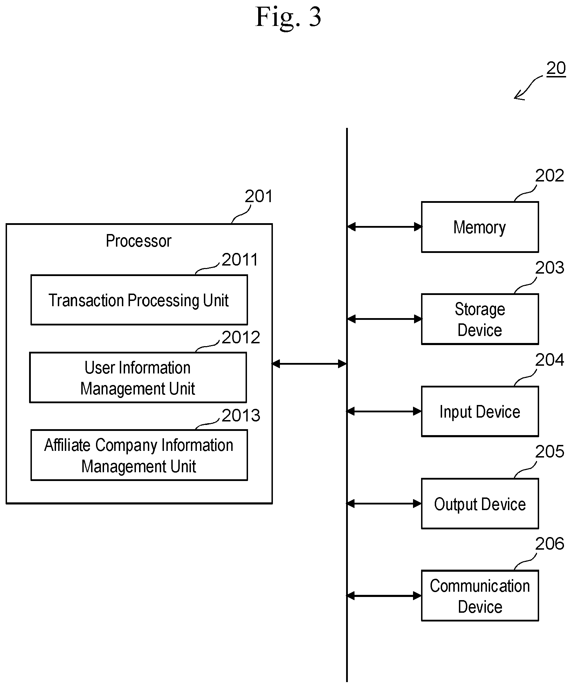

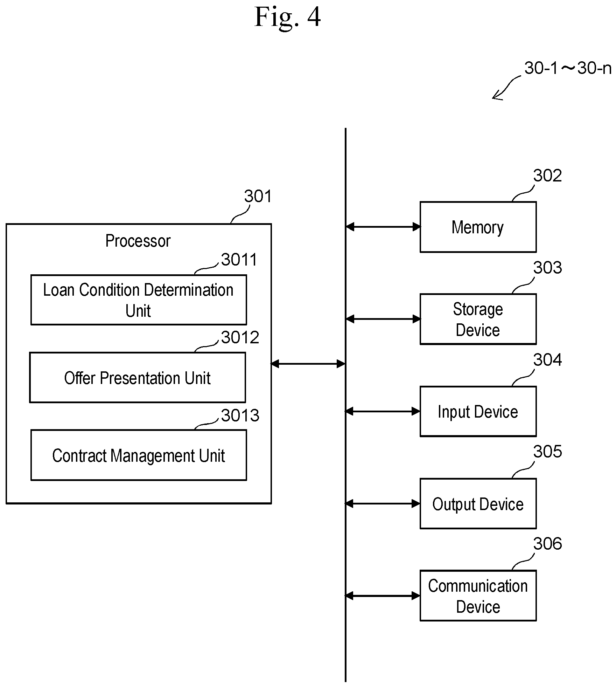

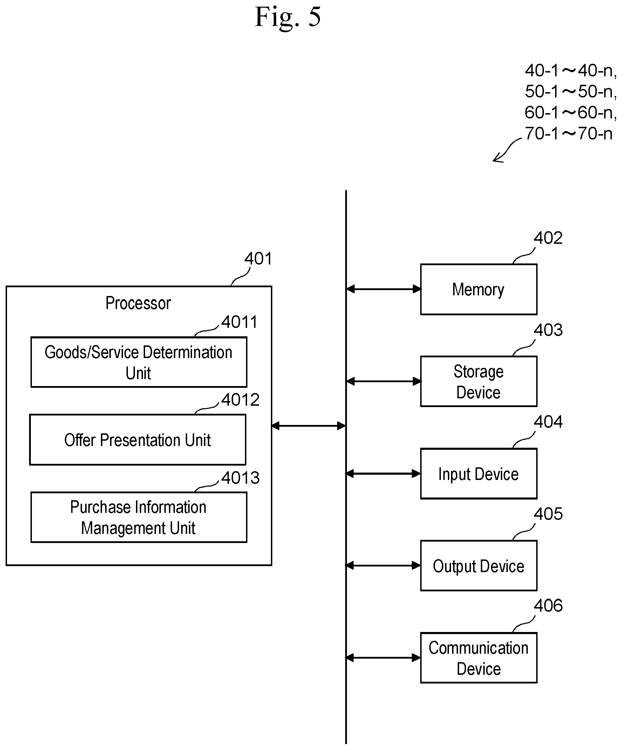

Figs. 2 to 5 illustrate exemplary internal configurations of devices that form the service providing system 1. Fig. 2 illustrates an exemplary internal configuration of each of the portable terminals 10_1 to 10_n of the users 1 to n. Fig. 3 illustrates an exemplary internal configuration of the management server 20. Fig. 4 illustrates an exemplary internal configuration of each of the servers 30_1 to 30_n of the loan providing companies 1 to n. Fig. 5 illustrates the internal configuration of each of the servers 40_1 to 40n of the online sales companies 1 to n, and the n servers 50_1 to 50_n and 60_1 to 60_n of the other services-A-to-X-providing companies 1 to n. As illustrated in Figs. 2 to 5, each device that forms the service providing system 1 is constructed from a computer.

### (i) Portable terminal

As illustrated in Fig. 2, each of the portable terminals 10_1 to 10_n includes a processor 101 that executes various programs installed on the terminal; a memory 102 that stores various programs and various parameters; a storage device 103 that stores computation results and obtained information; an input device 104 including a keyboard, a touch panel, various buttons, a microphone, and the like (either one or more of which may be included in the input device); an output device 105 including a display device, a printer, a speaker, and the like (either one or more of which may be included in the output device); and a communication device 106 adapted to be connected to the network 100 to communicate with external devices. Though not illustrated, each of the portable terminals 10_1 to 10_n may also include a GPS function, an accelerometer, a vibration sensor, a pulse sensor, an orientation sensor, and a gyro sensor, for example. Such sensors operate in cooperation with an exercise record application processing unit 1013 or a mapping application processing unit described below.

The processor 101 reads various programs from the memory 102, expands the programs in a built-in memory (not illustrated), and executes the programs as appropriate. Fig. 2 illustrates a state in which various programs are expanded in the built-in memory of the processor 101. The processor 101 executes a core application processing unit 1011, an online shopping application processing unit 1012, an exercise record application processing unit 1013, an SNS application processing unit 1014, a healthcare application processing unit 1015, a personal health record application processing unit 1016 (a medicine notebook application processing unit), a real estate management application processing unit 1017, a personnel information management application processing unit 1018, and a mapping application processing unit 1019 as programs.

The core application processing unit 1011 is an application program that has been downloaded to each of the portable terminals 10_1 to 10_n by the user from a site (i.e., website of a service) provided by the management server 20 or an application providing site of a third party, for example. The core application processing unit 1011 generates a core account within the storage device 103 of each of the portable terminals 10_1 to 10_n, executes direct deposit or withdrawal of electronic money into/from the core account or executes electronic payment through the core account using the portable terminal and obtains its record, and also communicates with a financial company, such as a bank, with which the user has a contract (i.e., has an account) on an as-needed basis or periodically, as described below, so that the user obtains information on the history of transactions with the financial company (e.g., information on deposit and withdrawal of money (such as information on the amount of money, transfer destination, and date), information on debt, and information on the loan repayment status) or information on the usage history of a credit card, for example, and then stores the information into the storage device 103 in association with the core account. In addition, the core application processing unit 1011 is configured to operate in cooperation with a server of a bank where the debit account for payment of fees (i.e., communication charges) for a portable phone or a fixed-line phone is provided, and obtain information on the balance of the account or the history of the telephone fees withdrawn from the account one by one. Further, the core application processing unit 1011 operates in cooperation with various application processing units described below, and stores information obtained by the various application processing units into the storage device 103 in association with the core account. Then, the core application processing unit 1011 computes the individual rating score of the user on the basis of the information stored in the storage device 103 in association with the core account. The core application processing unit 1011 may allow the individual rating score to be viewed only by the user who owns the portable terminal via the output device 105.

The online shopping application processing unit 1012 is configured to operate in cooperation with the core application processing unit 1011 and an online-shopping-related application that has been loaded onto the portable terminal 10_k of the user (which means a portable terminal of the k-th user (where k = 1 to n); hereinafter the same). When the user purchases some goods or services via the online-shopping-related application that has been loaded onto the portable terminal, information on the purchase is obtained, and the obtained purchase information is delivered to the core application processing unit 1011 on an as-needed basis or periodically. Alternatively, the core application processing unit 1011 may be configured to periodically inquire of the online shopping application processing unit 1012 to obtain the purchase information of the user.

The exercise record application processing unit 1013 is configured to operate in cooperation with the core application processing unit 1011, and obtains information on the exercise state of the user of the portable terminal 10_k on an as-needed basis and/or periodically, and then delivers the obtained information on the exercise state of the user to the core application processing unit 1011. For example, when the user performs an exercise, the portable terminal 10_k measures the duration of the exercise and the magnitude of a load (which is defined by the magnitude of a motion measured by each sensor, for example) using the aforementioned accelerometer, vibration sensor, and pulse sensor, for example. Then, the exercise record application processing unit 1013 automatically computes the amount of exercise of the user using information on the duration of exercise and the magnitude of the load measured by each sensor (for example, the amount of exercise can be computed through computation of the duration of the exercise and consumed calories), and delivers it to the core application processing unit 1011.

The SNS application processing unit 1014 is configured to operate in cooperation with the core application processing unit 1011 and an SNS (social networking service)-related application that has been loaded onto the portable terminal 10_k of the user, and obtains information on the friendship status of the user (i.e., owner) of the portable terminal 10_k in the SNS (e.g., information on the use frequency of the SNS, the number of friends, and communities to which the user belongs), and then delivers the obtained information on the friendship status to the core application processing unit 1011 on an as-needed basis or periodically.

The healthcare application processing unit 1015 is configured to operate in cooperation with the core application processing unit 1011 and a healthcare-related application that has been loaded onto the portable terminal 10_k of the user, and obtains information on the healthcare of the user (i.e., owner) of the portable terminal 10_k (e.g., the body weight of the user, the heart rate or pulses obtained by the aforementioned pulse sensor, and results of a medical checkup) from the healthcare-related application that has been loaded onto the portable terminal, and then delivers the obtained information on the healthcare to the core application processing unit 1011 on an as-needed basis or periodically. In addition, information on the body weight of the user and the results of the medical checkup are updated by periodically inquiring of the user from the healthcare application processing unit 1015, for example. Alternatively, the healthcare application processing unit 1015 may access an external healthcare information management server (not illustrated in Fig. 1) and obtain at least a part of information on the healthcare of the target user registered in the server.

The personal health record application processing unit 1016 is configured to operate in cooperation with the core application processing unit 1011 and a medication-related application that has been loaded onto the portable terminal 10_k of the user, and obtains information on the medication state of the user (i.e., owner) of the portable terminal 10_k (e.g., the types of drugs, the frequency of medication, and effectiveness of the drugs) via the medication-related application that has been loaded onto the portable terminal, and then delivers the obtained information on the medication state to the core application processing unit 1011 on an as-needed basis or periodically. The information on the medication state may also be obtained by accessing an external medication data management server (not illustrated in Fig. 1), for example. Alternatively, the user may, upon purchasing a drug in a pharmacy, register information on the purchased drug in the portable terminal 10_k via a medication-related application that has been loaded onto the portable terminal so that the personal health record application processing unit 1016 can read the information. Alternatively, when the user purchases a drug in some shop, the personal health record application processing unit 1016 may communicate with the online shopping application processing unit 1012 and obtain information on the purchased drug for management purposes.

The real estate management application processing unit 1017 is configured to operate in cooperation with the core application processing unit 1011, and obtains information on a real estate owned by the user (i.e., owner) of the portable terminal 10_k (e.g., the type of the real estate, address, size, and the age of the real estate if it is a building), and then delivers the obtained information on the real estate to the core application processing unit 1011 on an as-needed basis or periodically. The information on the real estate owned by the user can be obtained by inquiring of the user from the real estate management application processing unit 1017, for example. Alternatively, the real estate management application processing unit 1016 may access an external real estate information management server (not illustrated in Fig. 1) to obtain information on a real estate of the target user registered in the server. Further, the user may be able to update his/her own real estate information by operating his/her portable terminal 10_k.

The personnel information management application processing unit 1018 is configured to operate in cooperation with the core application processing unit 1011, and obtains the personnel information of the user (i.e., owner) of the portable terminal 10_k (e.g., age, academic background, business career, annual income, and occupation), and then delivers the obtained personnel information to the core application processing unit 1011 on an as-needed basis or periodically. The personnel information of the user is obtained by inquiring of the user from the personnel information management application processing unit 1018 periodically (e.g., once a year), for example. Further, the user may be able to update his/her personnel information by operating his/her portable terminal 10_k.

The mapping application processing unit 1019 is configured to operate in cooperation with the GPS function and the core application processing unit 1011, and obtains travel information of the user (i.e., owner) of the portable terminal 10_k (e.g., travel date and time, travel route, place of stay, duration of stay, and duration of travel) by utilizing the GPS function, and then delivers the obtained travel information to the core application processing unit 1011 on an as-needed basis or periodically. In addition, the mapping application processing unit 1019 estimates the residential zone of the user (i.e., owner) on the basis of the travel information, and obtains information on the living area of the estimated residential zone, and then delivers the information to the core application processing unit 1011.

As described above, although each of the portable terminals 10_1 to 10_n includes various processing units 1011 to 1019, it need not include all of such processing units other than the core application processing unit 1011, and it may also include other processing units. For example, predetermined processing units (or predetermined application programs) may be installed on each of the portable terminals 10_1 to 10_n as appropriate and used. Then, information obtained by the newly installed application programs may be used to compute the individual rating score of the user.

### (ii) Management server

The management server 20 is a server computer of a company that manages a service site for allowing transactions to be performed between each user and each company. As illustrated in Fig. 3, the management server 20 includes a processor 201 that executes various installed programs; a memory 202 that stores various programs and various parameters; a storage device 203 that stores results of computation and obtained information; an input device 204 including a keyboard, a touch panel, various buttons, a microphone, and the like (either one or more of which may be included in the input device); an output device 205 including a display device, a printer, a speaker, and the like (either one or more of which may be included in the output device); and a communication device 206 adapted to be connected to the network 100 to communicate with external devices, such as the portable terminals 10_1 to 10_n, the servers 30_1 to 30_n of the loan providing companies 1 to n, the servers 40_1 to 40_n of the online sales companies 1 to n, the servers 50_1 to 50_n and 60_1 to 60_n of the services-A-to-X-providing companies 1 to n, and the servers 70_1 to 70_n of the advertisement delivery companies 1 to n.

The processor 201 reads various programs from the memory 202, expands the programs in a built-in memory (not illustrated), and executes the programs as appropriate. Fig. 3 illustrates a state in which various programs are expanded in the built-in memory of the processor 201. The processor 201 executes a transaction processing unit 2011, a user information management unit 2012, and an affiliate company information management unit 2013 as programs.

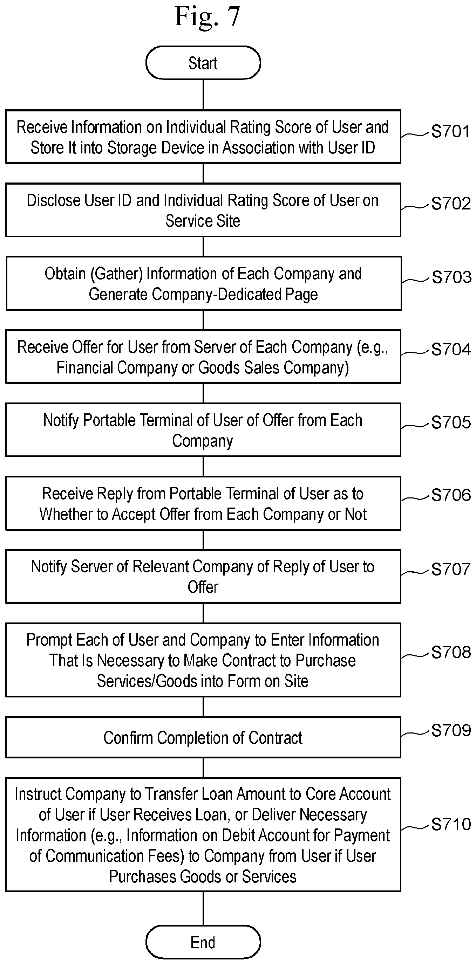

The transaction processing unit 2011 executes a process of presenting offers related to various transactions between the portable terminals 10_1 to 10_n and the servers 30_1 to 30_n of the loan companies, the servers 40_1 to 40_n of the online sales companies, or the servers 50_to 50_n and 60_1 to 60_n of the services-A-to-X-providing companies, for example, and managing the transactions. The operation of the transaction processing unit 2011 will be described in detail later (see Fig. 7).

The user information management unit 2012 receives from each of the portable terminals 10_1 to 10_n of the users information that identifies the portable terminal and the individual rating score, and stores the information that identifies the portable terminal as well as the information on the individual rating score into the storage device 203 in association with the user ID assigned to each user. In addition, the user information management unit 2012 generates a dedicated website (i.e., personal page) that can be viewed only by each user on the management server 20, and posts information on offers from various service providing companies on the page. The operation of the user information management unit 2012 will also be described in detail later (Fig. 7).

The affiliate company information management unit 2013 obtains information from each of the loan providing companies 1 to n, the online sales companies 1 to n, the advertisement delivery companies 1 to n, and the services-A-to-X-providing companies 1 to n (e.g., the address, telephone number, representative, the type of business, such as services or goods handled, and the form of business of the company) as well as information on an offer from each company for each user, and stores the information into the storage device 203 together with the identification ID of each company. In addition, the affiliate company information management unit 2013 generates a dedicated page (i.e., company's dedicated page(a page dedicated to a company)) that can be operated and viewed only by each company described above on the management server 20, and posts the individual rating score of each user on the page. In addition, the affiliate company information management unit 2013 reads information on a desired company from the storage device 203 as needed, and sends the information to the transaction processing unit 2011.

### (iii) Servers of loan providing companies

Each of the servers 30_1 to 30_n of the loan providing companies 1 to n is a server of a company that provides loan services to each user whose individual rating score is disclosed on the company's dedicated page of the service site. Each of the servers 30_1 to 30_n includes a processor 301 that executes various installed programs; a memory 302 that stores various programs and various parameters; a storage device 303 that stores results of computation and obtained information; an input device 304 including a keyboard, a touch panel, various buttons, a microphone, and the like (either one or more of which may be included in the input device); an output device 305 including a display device, a printer, a speaker, and the like (either one or more of which may be included in the output device); and a communication device 306 adapted to be connected to the network 100 to communicate with external devices, such as the portable terminals 10_1 to 10_n and the management server 20.

The processor 301 reads various programs from the memory 302, expands the programs in a built-in memory (not illustrated), and executes the programs as appropriate. Fig. 4 illustrates a state in which various programs are expanded in the built-in memory of the processor 301. The processor 301 executes a loan condition determination unit 3011, an offer presentation unit 3012, and a contract management unit 3013 as programs.

The loan condition determination unit 3011 obtains information on the individual rating score of each user provided by the management server 20, and determines loan conditions for the target user. For example, information (i.e., parameters) on loan conditions corresponding to each individual rating score is stored in the memory 302 or the storage device 303 in advance, and the loan condition determination unit 3011 reads information on the loan conditions corresponding to the individual rating score of the target user obtained from the management server 20. Then, for example, a person in charge of the loan providing company finally checks the loan conditions read, and if there is no problem, he/she enters a final determination instruction into the loan condition determination unit 3011 so that the loan condition determination unit 3011 delivers information on the loan conditions to the offer presentation unit 3012.

The offer presentation unit 3012 gathers the information on the loan conditions obtained from the loan condition determination unit 3011 and the target user ID, and sends to the management server 20 the user ID and the information on the loan conditions to be offered to the user using the communication device 306.

The contract management unit 3013, after checking that the user has concluded a contract with the loan providing company, transfers the contracted loan amount to the core account in the portable terminal 10_k of the user. The contract management unit 3013 obtains from the management server 20 information that identifies a portable terminal associated with an ID of the contracted (i.e., loaned) user, that is, the portable terminal 10_k of the user, and accesses the server 90_k of the telecommunications company k contracted by the user of the portable terminal 10_k so as to obtain information on the debit account for payment of communication charges of the user, and then stores the obtained information into the storage device 303 in association with the user ID. If the user who had been offered the loan conditions does not conclude a contract even when he/she is quite close to the deadline or the deadline is over (if the user does not indicate his/her intention to receive the loan or not on the service site provided by the management server 20), the contract management unit 3013 requests the management server 20 to remind the user to indicate his/her intention.

Although the loan conditions are automatically determined using parameters and the like herein, a person in charge of the loan providing company may send loan conditions, which have been determined by a (the) person on the basis of the individual rating score, to the management server 20 via a server of the financial company.

### (iv) Servers of online sales company and service providing company

Each of the servers 40_1 to 40_n of the online sales companies 1 to n determines a group of goods to be offered to each user on the basis of the individual rating score of each user (i.e., a group of goods that appears to be best for the target user from the individual rating score), and posts the offer on the personal page of the service site, thus promoting the user to purchase the goods. In addition, each of the servers 50_1 to 50_n and 60_1 to 60_n of the other services-A-to-X-providing companies 1 to n determines a service to be offered to each user on the basis of the individual rating score of each user (i.e., a service that appears to be best for the target user from the individual rating score), and posts the offer on the personal page of the service site, thus promoting the user to conclude a contract. Each of the servers 70_1 to 70_n of the advertisement delivery companies 1 to n requests the management server 20 to post an advertisement that appears to be best on the personal page of the service site on the basis of the individual rating score of each user that has been uploaded to the company's dedicated page of the service site provided by the management server 20. Although the personal information of the relevant user is not posted on the company's dedicated page of the service site, the page has posted thereon living area information, health information, economic credit information, personnel information, and the like of the user as scores. Therefore, such scores are considered to have a considerable advertisement value for the advertisement delivery companies 1 to n.

Each of the servers 40_1 to 40_n, 50_1 to 50_n, 60_1 to 60_n, and 70_1 to 70_n of the online sales companies, other various service providing companies, and the advertisement delivery companies includes a processor 401 that executes various installed programs; a memory 402 that stores various programs and various parameters; a storage device 403 that stores results of computation and obtained information; an input device 404 including a keyboard, a touch panel, various buttons, a microphone, and the like (either one or more of which may be included in the input device); an output device 405 including a display device, a printer, a speaker, and the like (either one or more of which may be included in the output device); and a communication device 406 adapted to be connected to the network 100 to communicate with external devices, such as the portable terminals 10_1 to 10_n and the management server 20.

The processor 401 reads various programs from the memory 402, expands the programs in a built-in memory (not illustrated), and executes the programs as appropriate. Fig. 5 illustrates a state in which various programs are expanded in the built-in memory of the processor 401. The processor 401 executes a goods/service determination unit 4011, an offer presentation unit 4012, and a purchase/contract information management unit 4013 as programs.

The goods/service determination unit 4011 obtains information on the individual rating score of each user provided by the management server 20, and determines goods (i.e., a group of goods) or a service (i.e., a group of services) for the target user. The goods/service determination unit 4011 reads information on the group of goods or the group of services corresponding to the individual rating score of the target user obtained from the management server 20. Then, a person in charge of the online sales company or the service providing company, for example, finally checks the read information on the group of goods or the group of services, and if there is no problem, he/she enters a final determination instruction into the goods/service determination unit 4011 so that the goods/service determination unit 4011 delivers information on the group of goods or the group of services to the offer presentation unit 4012.

The offer presentation unit 4012 gathers the information on the group of goods or the group of services to be offered to each user, which has been obtained from the goods/service determination unit 4011, and the target user ID, and sends to the management server 20 the user ID and the information on the group of goods or the group of services to be offered to the user using the communication device 406.

The purchase information management unit 4013, after checking that the user has concluded a contract with the company, obtains from the management server 20 information that identifies a portable terminal associated with the ID of the contracted user, that is, the portable terminal 10_k of the user. Then, the purchase information management unit 4013 accesses a server 80_k of a telecommunications company contracted by the user for the portable terminal so as to obtain information on the debit account for payment of the communication charges of the user, and then stores the information into the storage device 403 in association with the user ID. In addition, if the target user who had been offered the goods or services does not indicate his/her intention to purchase the goods or services even when he/she is quite close to the preset deadline (if the user does not indicate his/her intention to purchase the goods or services or not on the service site provided by the management server 20), the purchase information management unit 4013 requests the management server 20 to remind the user to indicate his/her intension.

### <Process performed on portable terminal of user>

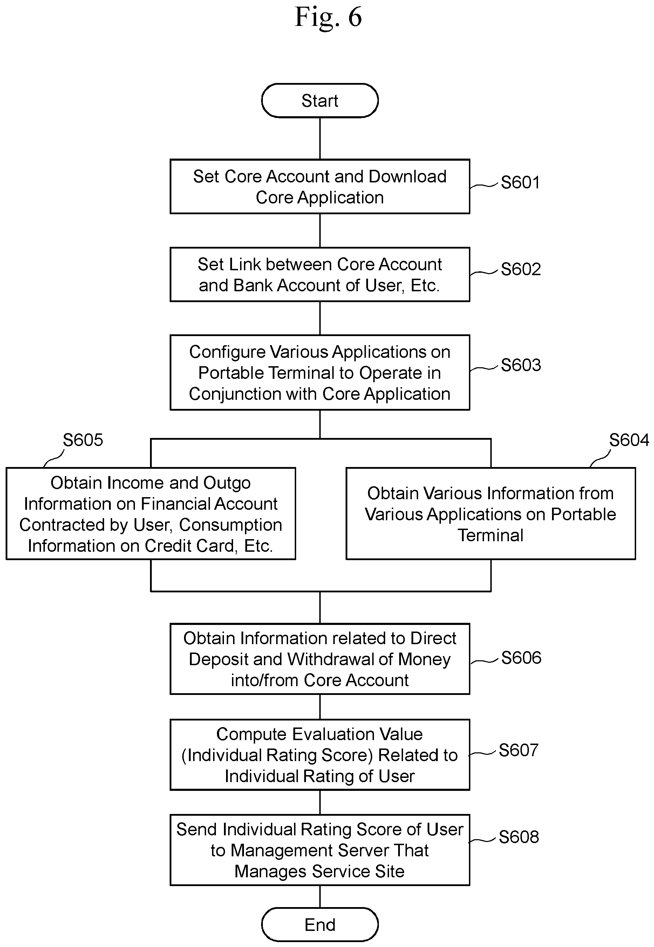

Fig. 6 is a flowchart for illustrating the operation of a core application executed on each of the portable terminals 10_1 to 10_n of the users. In this specification, the operation of the core application will be described on the assumption that the subject that performs each step (i.e., steps other than step 601) is the core application processing unit 1011. However, the subject may also be the processor 101 since the processor 101 executes the core application processing unit 1011.

### (i) Step 601

The processor 101 accesses the management server 20 or an appropriate external server using the communication device 106 in response to an operation of the user, downloads to the portable terminal 10_k a core application for receiving various services on the service site provided by the management server 20, and stores the application into the memory 102. Then, for example, the processor 101 reads the core application from the memory 102 and expands it in the built-in memory to generate the core application processing unit 1011, and also generate a core account within the storage device 103.

The core application processing unit 1011 is an application that gathers various information of the user and computes the individual rating score of the user on the basis of the various information.

The core account is an account that is associated with the portable terminal 10_k and allows for direct deposit or withdrawal of electronic money into/from the account or electronic payment through the account using the portable terminal 10_k, for example, upon receiving an instruction from the core application processing unit 1011. Further, the core account is also associated with a contracted account for payment of communication charges for the portable terminal or an account of a financial institution or a credit company owned (i.e., contracted) by the user by the core application processing unit 1011 so that each time the user deposits money or withdraws money using the portable terminal 10_k in a store or on the Internet and each time money is deposited into or withdrawn from the contracted account for payment of communication charges for the portable terminal or the account of the financial institution or the credit company owned (i.e., contracted) by the user regardless of whether the portable terminal 10_k is used by the user or not, information on such deposit or withdrawal of money is obtained via the core application processing unit 1011 on an as-needed basis or periodically so as to be stored into the core account.

In addition, the processor 101 reads the core application from the memory 102, and expands it in the built-in memory to generate the other various application processing units 1012 to 1019, and then sets storage areas (i.e., specific information storage areas) associated with the various application processing units within the storage device 103 in association with the core account, and stores various information obtained by the various application processing units into the storage areas.

### (ii) Step 602

The core application processing unit 1011 accesses one of the servers 90_1 to 90_n of the telecommunications companies 1 to n contracted by the user for the portable terminal 10_k, and at least one of the servers 80_1 to 80_n of the financial companies (i.e., contracted financial companies) 1 to n contracted by the user, either automatically or in response to an instruction of the user, and sets a link between the core account, the account of the user for payment of the communication charges, and the financial account. "To set a link" as referred to herein means performing association so as to be able to automatically obtain income and outgo information on the accounts and enable transfer (i.e., deposit and withdrawal) of money between the core account and such accounts. For example, when a target user deposits money or withdraws money into/from an account for which a link has been set, or when a third party transfers money to the account or withdraws money from the account, information on such deposit or withdrawal of money is sent to the portable terminal 10_k of the user one by one so that the information is stored into (written to) the core account by the core application processing unit 1011. Also, when the core application processing unit 1011 transfers money to the core account from an account for which a link has been set or transfers money to an account for which a link has been set from the core account in response to an instruction of the user, information on such deposit/withdrawal of money is stored into the core account by the core application processing unit 1011 one by one.

### (iii) Step 603

The core application processing unit 1011 mutually associates the core application processing unit 1011 and the online shopping application processing unit 1012, the exercise record application processing unit 1013, the SNS application processing unit 1014, the healthcare application processing unit 1015, the personal health record application processing unit 1016, the real estate management application processing unit 1017, the personnel information management application processing unit 1018, and the mapping application processing unit 1019 (which may also be referred to as various application processing units 1012 to 1019 hereafter) that have been generated in the portable terminal 10_k by the core application so that they operate in cooperation with one another. That is, the core application processing unit 1011 controls the operations of the various application processing units 1012 to 1019 so as to deliver information, which is obtained by the various application processing units 1012 to 1019, to the core application processing unit 1011 on an as-needed basis or periodically. "To operate in cooperation with one another" as referred to herein means that one operation triggers another operation. For example, when the core application processing unit 1011 obtains information from the various application processing units 1012 to 1019, the obtained information is stored into the core account set within the storage device 103, for example.

### (iv) Step 604

The core application processing unit 1011 obtains various information on the user (i.e., owner of the portable terminal 10_k) from the various application processing units 1012 to 1019 of the portable terminal 10_k, and stores the information into the core account set within the storage device 103. The core application processing unit 1011 operates in cooperation with the various application processing units 1012 to 1019 on an as-needed basis or periodically to obtain various information.

For example, the online shopping application processing unit 1012 accesses an online-shopping-related application that has been loaded onto the portable terminal, obtains information on purchase of goods of the user at an online store when he/she used the portable terminal 10_k (i.e., information on the types of purchased goods, the amount of money, date and time, and stores of purchase), and stores the information into the core account set within the storage device 103 in association with the online shopping application processing unit 1012. The core application processing unit 1011 obtains the information from the core account.

The exercise record application processing unit 1013 obtains a record of exercise of the user, and stores the information into the core account set within the storage device 103 in association with the exercise record application processing unit 1013. The core application processing unit 1011 obtains the information from the core account. As described above, the exercise record application processing unit 1013 may, on the premise that the user performs exercise while holding the portable terminal 10_k, obtain data measured by various sensors (e.g., an accelerometer, a vibration sensor, a pulse sensor, an orientation sensor, and a gyro sensor) provided in the portable terminal 10_k, compute (estimate) the amount of exercise from the measured data, and record the data as a record of exercise. Alternatively, the amount of exercise may be estimated by obtaining information on the type of exercise and the duration of exercise from a plan of exercise of the user on a scheduler provided in the portable terminal 10_k or from a diary, for example.

The SNS application processing unit 1014 accesses an SNS (social networking service)-related application that has been loaded onto the portable terminal, obtains information on the friendship status of the user in the SNS when he/she used the portable terminal 10_k (e.g., information on the use frequency of the SNS, the number of friends, and communities to which the user belongs), and stores the information into the core account set within the storage device 103 in association with the SNS application processing unit 1014. The core application processing unit 1011 obtains the information from the core account.

The healthcare application processing unit 1015 accesses a healthcare-related application that has been loaded onto the portable terminal, obtains information on the healthcare of the user when he/she used the portable terminal 10_k (e.g., the body weight, the heart rate or pulses, and results of a medical checkup of the user), and stores the information into the core account set within the storage device 103 in association with the healthcare application processing unit 1015. The core application processing unit 1011 obtains the information from the core account. Information on the heart rate or pulses of the user is obtained by the pulse sensor provided in the portable terminal 10_k, for example. In addition, information on the body weight or the results of the medical checkup of the user may be obtained by periodically inquiring of the user from the healthcare application processing unit 1015 (and receiving the information from the user), for example, or by accessing an external healthcare information management server (not illustrated in Fig. 1) from the healthcare application processing unit 1015 so as to obtain at least a part of information on the healthcare of the target user registered in the server.

The personal health record application processing unit 1016 accesses a medication-related application that has been loaded onto the portable terminal, obtains information on the medication state of the user when he/she used the portable terminal 10_k (e.g., the types of drugs, the frequency of medication, and effectiveness of the drugs), and the stores the information into the core account set within the storage device 103 in association with the personal health record application processing unit 1016. The core application processing unit 1011 obtains the information from the core account. For example, the personal health record application processing unit 1016 may also access an external medication data management server (not illustrated in Fig. 1) to obtain information, or the user may, upon purchasing a drug in a pharmacy, enter information on the purchased drug into the portable terminal 10_k so that the personal health record application processing unit 1016 can read the information. Alternatively, when the user purchases a drug in some shop, the personal health record application processing unit 1016 may communicate with the online shopping application processing unit 1012 and obtain information on the purchased drug for management purposes.

The real estate management application processing unit 1017 obtains information on a real estate owned by the user (e.g., the type of the real estate, address, size, and the age of the real estate if it is a building), and stores the information into the core account set within the storage device 103 in association with the real estate management application processing unit 1017. The core application processing unit 1011 obtains the information from the core account. Information on the real estate owned by the user may also be obtained by inquiring of the user from the real estate management application processing unit 1017 (and receiving the information from the user), for example, or by accessing an external real estate information management server (not illustrated in Fig. 1) from the real estate management application processing unit 1017 so as to obtain real estate information of the target user registered in the server.

The personnel information management application processing unit 1018 obtains the personnel information of the user (e.g., age, academic background, business career, annual income, and occupation), and stores the information into the core account set within the storage device 103 in association with the personnel information management application processing unit 1018. The core application processing unit 1011 obtains the information from the core account. The personnel information of the user may also be obtained by inquiring of the user from the personnel information management application processing unit 1018 (and receiving the information from the user) periodically (e.g., once a year), for example. Further, the user may enter his/her personnel information by operating his/her portable terminal 10_k on an as-needed basis.

The mapping application processing unit 1019 obtains travel information of the user (e.g., travel date and time, travel route, place of stay, and duration of travel) by utilizing the GPS function of the portable terminal 10_k, and stores the information into the core account set within the storage device 103 in association with the mapping application processing unit 1019. The core application processing unit 1011 obtains the information from the core account. Further, the mapping application processing unit 1019 estimates the residential zone of the user on the basis of the travel information, and accesses an external information providing server (not illustrated in Fig. 1) on the basis of the estimated residential zone so as to obtain information on the value of the living area, such as the land price of the estimated residential zone and the deviation values of schools in the zone, and then stores the information into the core account set within the storage device 103 in association with the mapping application processing unit 1019. The core application processing unit 1011 obtains the information from the core account.

### (v) Step 605

The core application processing unit 1011 accesses one of the servers 90_1 to 90_n of the telecommunications companies and one of the servers 80_1 to 80_n of the credit card companies to obtain the debit account for payment of fees for the telecommunications company contracted by the user for the portable terminal 10_k as well as the income and outgo (i.e., deposited and withdrawn money) information (which includes balance information) on a financial (i.e., bank) account used (i.e., contracted) by the user and consumption information on a credit card contracted by the user (i.e., the date and time when the card was used, the amount of money, and the place where the card was used), and then stores the information into the core account set in the portable terminal 10_k. Although the present embodiment illustrates an example in which the core account is set within the storage device 103 of the portable terminal 10_k, the core account may also be set within a storage area dedicated to the user in a remote storage server (e.g., cloud service).

### (vi) Step 606

When the user directly deposits money into or withdraws money from the core account in a store or on the Internet using the portable terminal 10_k and/or each time money is transferred to the core account from an account for which a link has been set or money is transferred to an account for which a link has been set from the core account in response to an instruction of the user, the core application processing unit 1011 stores transaction information related to the deposit or withdrawal of money into the core account of the portable terminal on an as-needed basis or periodically.

### (vii) Step 607

The core application processing unit 1011 obtains information on the deposit and withdrawal of money, consumption information, and the like of the user from the core account, and also obtains the aforementioned various information from the information storage areas of the core account associated with the various application processing units. The core application processing unit 1011 computes an evaluation value (i.e., individual rating score) related to the individual rating of the user on the basis of the obtained information. The individual rating score is information representing the economic credit, living conditions, and the like of the user of the portable terminal 10_k by scores. A predetermined rating method is used but a known rating method may also be used. For example, a scoring list including items that are necessary for a financial institution to determine the credit of users may be formed, or rating may be performed through classification on the basis of the incomes of the users or on the basis of financial information on local governments or distribution of schools in the living areas estimated from travel information. Specifically, for example, the more the balance of an account, the higher a score that is given (i.e., the score changes in a stepwise manner), and the more the deposit or withdrawal is executed periodically in a balanced manner, the higher a score that is given. In addition, the health condition of the user is determined on the basis of the healthcare information and the medication information, and the better the health condition, the higher a score that is given (e.g., 10 scores are given to those with normal blood pressure, zero score is given to those with high blood pressure, and -10 scores are given to those with diabetes). Each of the aforementioned financial information, such as income and outgo or balance of the account of the user, consumption information, friendship information, travel information, exercise information, medication information, healthcare information, own real estate information, personnel information, and the like is referred to as information of each category. An evaluation score to be assigned in accordance with the conditions of a user is determined in advance for each category, and the evaluation score obtained for each category is integrated so as to compute the final individual rating score. The core application processing unit 1011 may also assign a weight to each category so as to adjust the final individual rating score by increasing or decreasing the evaluation score for each category when integrating it. For example, the evaluation score of the financial information may be multiplied by 1.5, and the evaluation score of the personnel information may be multiplied by 0.8 so that the resulting evaluation scores may be integrated to compute the final individual rating score. Further, the core application processing unit 1011 may be configured to determine, on the basis of automatically obtained information on some of categories, for example, financial information, such as income and outgo or balance of the account of the user, consumption information, travel information, exercise information, medication information, and healthcare information, if information on some of categories entered by the user, for example, medical checkup information, own real estate information, and personnel information is true or false (for example, by comparing the automatically obtained information on the category with the information on the category entered by the user, and determining that the information on the category entered by the user is false if there is any gap or contradiction between the two), and not add the information on the category determined to be false (or add zero score) for rating the individual rating score of the user so as to adjust the final individual rating score.

Information, such as the target categories for rating and the range of rating scores for each category, are disclosed to the public. Accordingly, information on the economic credit, living conditions, and the like of each user can be provided to the management server 20 and further each goods/service providing company without the personal information of each user being disclosed.

### (viii) Step 608

The core application processing unit 1011 sends the individual rating score of the user computed in step 607 and the evaluation score for each category (i.e., evaluation score that has been weighted if weighting adjustment is performed; hereinafter the same) to a server (i.e., management server 20) of a service site management company. An "individual rating score" as referred to in this specification includes evaluation scores for all categories, and when an individual rating score is disclosed, an evaluation score for each category associated with therewith can also be disclosed.

### <Details of process performed by management server>

Fig. 7 is a flowchart for illustrating a process executed by the management server 20. In this specification, description is made on the assumption that the subject that performs each step is the transaction processing unit 2011, the user information management unit 2012, or the affiliate company information management unit 2013. However, the subject may also be the processor 201 since the processor 201 executes such processing units.

### (i) Step 701

The user information management unit 2012 receives information that identifies a portable terminal of a user and an individual rating score sent from one of the portable terminals 10_1 to 10_n, provides an identification ID of the user, and stores the ID into the storage device 203 in association with the information that identifies the portable terminal and the individual rating score. In addition, the user information management unit 2012 sends the provided ID to the corresponding one of the portable terminals 10_1 to 10_n of the user. Then, one of the portable terminals 10_1 to 10_n stores the received identification ID into the storage device 103 or the memory 102 as the user ID to be used on the service site provided by the management server 20. It should be noted that the identification ID of the user may also be issued when the management server 20 permits each user to use the service site. In addition, a personal page that is a user's dedicated page may be set when the identification ID of the user is issued, for example.

### (ii) Step 702

The user information management unit 2012 generates on the management server 20 a dedicated page (i.e., personal page) that can be viewed only by each user, for example.

The user information management unit 2012 discloses the appropriately assigned identification ID of the user as well as the individual rating score of the user on a company's dedicated page (described below) of the service site. At this time, the personal information of the user is not disclosed at all. Therefore, each company that accesses the company's dedicated page will offer various services or goods on the basis of only the individual rating score. That is, for example, each of the loan providing companies 1 to n determines a loan amount for a corresponding user on the basis of the individual rating score of the user. In addition, each of the online sales companies 1 to n determines a group of goods (i.e., at least one group of goods) that appears to be best for a corresponding user among the groups of goods handled, on the basis of the individual rating score of the user. Further, each of the services-A-to-X-providing companies 1 to n determines a group of services (i.e., at least one group of services) that appears to be best for a corresponding user among the groups of services handled (e.g., medical services, such as complete medical checkups, human resource providing services, various rental services, outsourcing services, and online product services) on the basis of the individual rating score of the user. Further, each of the advertisement delivery companies 1 to n determines a group of advertisements (i.e., at least one group of advertisements) that appears to be best (or interesting) for a corresponding user on the basis of the individual rating score of the user.

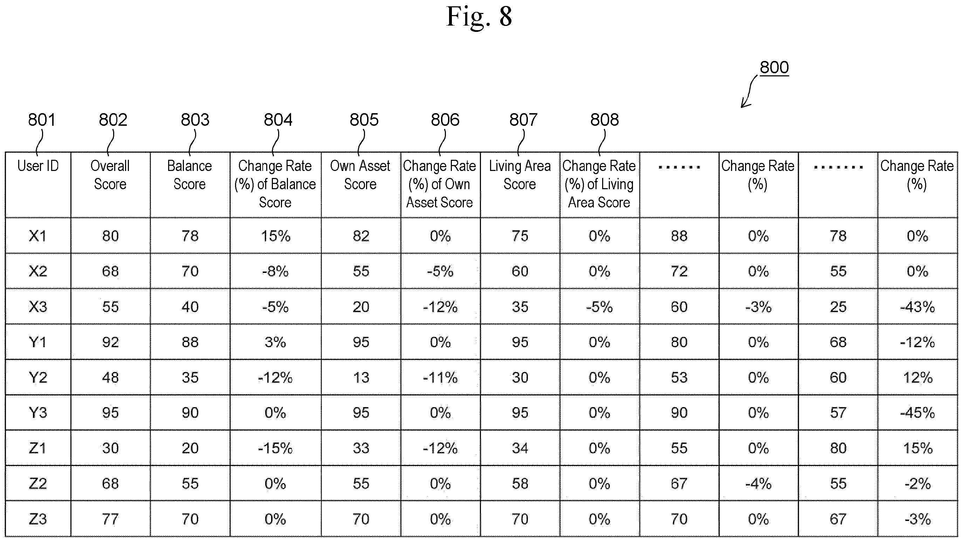

It should be noted that a display screen for the individual rating score of each user that is disclosed will be described later (see Fig. 8).

### (iii) Step 703

The affiliate company information management unit 2013 obtains information on the loan providing companies 1 to n, the online sales companies 1 to n, the advertisement delivery companies 1 to n, and the services-A-to-X providing companies 1 to n (e.g., the address, telephone number, representative, the type of business, such as services or goods handled, and the business form of the company) and information on an offer of each company for each user, and stores the information into the storage device 203 together with the identification ID of each company. In addition, the affiliate company information management unit 2013 generates on the management server 20 a dedicated page (i.e., company's dedicated page) that can be viewed only by each company described above, and posts the individual rating score of each user on the page. Further, the affiliate company information management unit 2013 reads information on a desired company from the storage device 203 as needed, and sends the information to the transaction processing unit 2011.

### (iv) Step 704

The transaction processing unit 2011 receives, from each of the servers 30_1 to 30_n of the loan providing companies 1 to n, the servers 40_1 to 40_n of the online sales companies 1 to n, the servers 50_1 to 50_n and 60_1 to 60_n of the services-A-to-X-providing companies 1 to n, and the servers 70_1 to 70_n of the advertisement delivery companies 1 to n, an offer determined to be provided to a target user by the company. Then, the transaction processing unit 2011 posts the offer for the user received from each company on the personal page of the user on the service site.

### (v) Step 705

The transaction processing unit 2011 notifies one of the portable terminals 10_1 to 10_n of the target user that there has been an offer(s) from each company. The user, upon receiving the notice, accesses his/her personal page on the service site using the portable terminal 10_k to check the offer from the company, and determines whether to accept the offer or not. The result of the determination is sent to the management server 20 from the portable terminal 10_k.

### (vi) Step 706

The transaction processing unit 2011 receives from one of the portable terminals 10_1 to 10_k of the target user a reply of the user to the offer(s) from each company.

### (vii) Step 707

The transaction processing unit 2011 notifies the server of the relevant company that the reply of the user to the offer has been received. If the reply of the user is refusal, the process ends at this point. If the reply of the user is acceptance, the process proceeds to step 707.

### (viii) Step 708

The transaction processing unit 2011 sends a contract form fill-in request to each of the portable terminal of the target user and the server of the target company to prompt the target user and the target company to enter information that is necessary to make a contract to purchase goods or services into the form on the service site (i.e., a page dedicated to the contract; for example, if the reply of the user is acceptance, each of the target user and the target company is provided with the right to access the page dedicated to the contract).

The user and the company enter necessary information into the contract form on the service site via the portable terminal of the user and the server of the company, respectively. After entering the necessary information, each of the user and the company places a check mark indicating that the form is filled out. If a check mark is not placed even after a predetermined period of time has elapsed, the transaction processing unit 2011 requests the portable terminal of the user and/or the server of the company to enter necessary information into the contract form (i.e., sends a reminder).

The necessary information to be entered by the user is limited as much as possible, for example, to confirmation of the contract provisions and confirmation of conclusion of the contract. User information that is necessary to fulfill a contract is, if there is portable terminal information identified by an identification ID that has been already provided, sufficiently known from the debit account information for payment of communication charges of the user associated with the portable terminal information. Therefore, the company accesses the management server 20 from the server of the company after concluding a contract and obtains the portable terminal information of the user, and further accesses the server of the telecommunications company contracted by the user for the portable terminal and obtains the minimum user information that is necessary to fulfil the contract, such as the debit account information for payment of communication charges of the user. In the stage in which the contract form is filled in, the user is able to see only his/her own information, and the company is also able to see its own information. Thus, a contract can be concluded in the stage in which the personal information of the user is not disclosed to the company.

### (ix) Step 709

The transaction processing unit 2011 checks each of the contract forms filled out by the target user and the target company, and determines if all of the necessary information has been entered and if correct information has been entered. Whether correct information has been entered or not is determined by, for example, checking the information entered into the contract form against information that has been obtained from each of the user and the company using a different method and at different timing (e.g., for the user, it is determined whether at least confirmed information on the portable terminal matches the debit account for payment of communication charges, and for the company, it is determined whether at least the license number matches the registered information).

### (x) Step 710

### (x-1) Case where loan contract is concluded between user and financial company

For example, the transaction processing unit 2011 instructs the financial company to transfer a loan amount to the core account of the user. Then, upon confirming with the financial company that the transfer of the loan amount is complete and also confirming with the user that the loan amount has been received (for example, after receiving a notice of completion from each of the financial company and the user), the transaction processing unit 2011 may send information that identifies the portable terminal of the user, as security for the loan, to the server 30_k of the financial company so that the server 90_k (one of the servers 90_1 to 90_n) of the telecommunications company contracted by the user for the portable terminal is accessed via the financial company so as to obtain information on the debit account for payment of the communication charges of the user.

As another embodiment, the transaction processing unit 2011 of the management server 20 may be configured to once receive a loan amount from the financial company and confirm the amount and then send it to the core account of the user. In such a case, the transaction processing unit 2011 receives the loan amount sent from the server of the financial company and information related thereto (e.g., information on the borrower (i.e., the user ID of the borrower, the amount of money, and the contract date and time)), and stores them into the memory 202 or the storage device 203. Then, the transaction processing unit 2011 reads the information related to the loan amount from the memory 202 or the storage device 203, and confirms if the loan amount is correct (i.e., the same as the contracted amount). If the amount is determined to be correct, the transaction processing unit 2011 sends the loan amount to the portable terminal 10_k. The core application processing unit 1011 of the portable terminal 10_k stores the received loan amount into the core account generated within the storage device 103.

As described above, although the loan amount may be directly stored into the core account, the loan amount may also be transferred to the destination account of the financial institution for the core account (i.e., a financial institution contracted by the user) or the debit account of the user from which communication charges is withdrawn. In such a case, the transaction processing unit 2011 of the management server 20 manages a communication process related to transfer of the loan amount.

### (x-2) Case where goods purchase contract is concluded between user and online sales company

The transaction processing unit 2011 instructs the online sales company to send the goods to the user and send a proof of shipment (e.g., an image of a slip of a parcel delivery service company) to the management server 20. Then, when a person in charge of the service site confirms that the delivery of the goods is complete, the transaction processing unit 2011 may send information that identifies the portable terminal of the user, as security for the payment for the goods, to the server 40_k of the online sales company so that the server of the telecommunications company contracted by the user for the portable terminal may be accessed via the online sales company so as to obtain the debit account information for payment of communication charges of the user (including the deliver address of the goods).

### (x-3) Case where service providing contract (i.e., purchase contract) is concluded between user and each of services-A-to-X-providing companies

The transaction processing unit 2011 instructs ones of the service-A-to-X-providing companies to send data that proves the right to use the relevant service (e.g., an image or data of a membership card, membership number, and an access password) to the portable terminal 10_k of the user. When a person in charge of the service site confirms that the delivery of the document is complete (e.g., after receiving the notice of completion from the user), the transaction processing unit 2011 may send information that identifies the portable terminal of the user, as security for the payment for the contracted service, to the server 50_k of the service providing company so that the server of the telecommunications company contracted by the user for the portable terminal may be accessed via the service providing company so as to obtain the debit account information for payment of communication charges of the user.

### <Exemplary configuration of individual rating score table of user>

Fig. 8 illustrates an exemplary configuration of an individual rating score table 800 of each user that is disclosed to each company on the company's dedicated page of the service site.

The management server 20 receives the individual rating scores of users and updated information thereof from the portable terminals 10_1 to 10_n of the users on an as-needed basis or periodically, and writes them into the company's dedicated page provided on the service site. If a new user is present, the user information management unit 2012 adds a field for the new user to the table in Fig. 8, and enters the individual rating score of the user into the field. In addition, upon receiving an updated individual rating score of the existing user, the user information management unit 2012 updates the score of the relevant item.

The individual rating score table 800 contains, as constituent items, at least a user ID (i.e., user identification information) 801 for identifying and discriminating each user, an overall score 802 computed by comprehensively taking all items into consideration, a balance score 803 computed on the basis of income information (including information on the deposited money) and outgo information of the target user, a balance score change rate 804 indicating how much the balance score has changed (increased or decreased) after a predetermined period of time has elapsed, a score 805 of assets owned by the target user (e.g., movables, real estates, and valuable securities), an own asset score change rate 806 indicating how much the target user's own asset score has changed (increased or decreased) after a predetermined period of time has elapsed, a living area score 807 obtained by quantifying the value of the living area of the target user on the basis of the land price of the residential zone estimated from the travel information of the target user, the deviation values of schools in the zone, and the like, and a living area score change rate 808 indicating how much the living area score has changed (increased or decreased) after a predetermined period of time has elapsed. Needless to say, the individual rating score table 800 may also contain scores, such as the consumption state, healthcare, exercise, friendship, medication, and personnel relationship, as well as the change rates thereof, though they are omitted in the table.

As described above, each company can access the company's dedicated page on the service site via the server of the company and see the individual rating score of each user posted on the individual rating score table 800 of Fig. 8. Then, each company generates an offer (i.e., the aforementioned offer to provide loans, goods, or services) for a particular user and uploads the offer to the service site. Regarding loans, information as to whether each user wants to receive a loan or not may be posted on the company's dedicated page in advance (i.e., each user is able to send such information to the management server 20 on an as-needed basis), and a financial company may generate an offer for the user (i.e., the one who wants to receive a loan) in response to the information and upload the offer to the page.

### <Exemplary configuration of browse page for user>

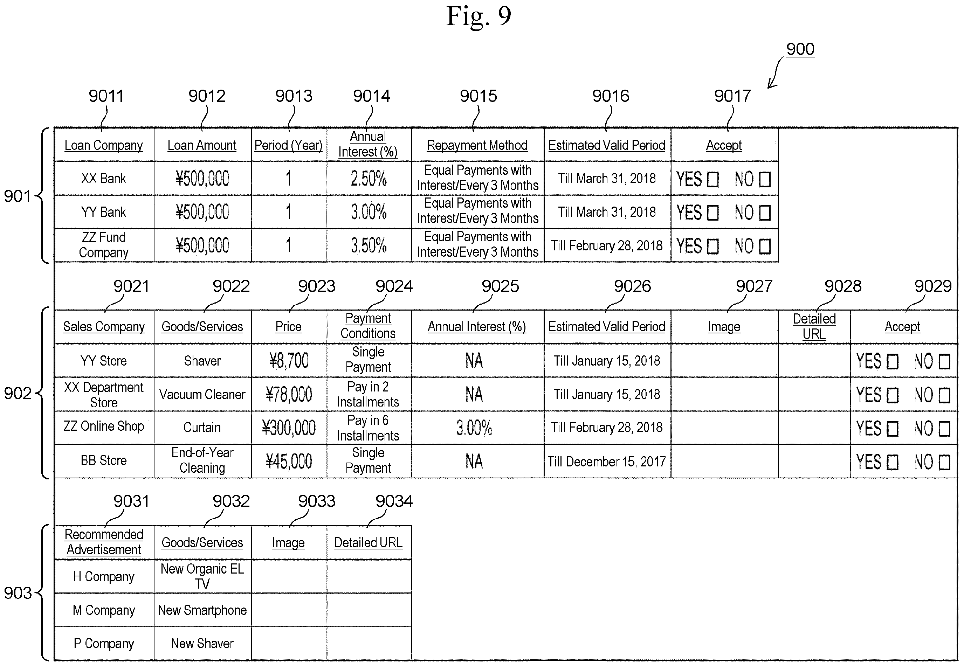

Fig. 9 illustrates an exemplary configuration of a personal page that can be viewed only by each user (i.e., owner of each of the portable terminals 10_1 to 10_n). The personal page is created for and assigned to each individual user at a time point he/she joins the service site as described above. Each user is not able to view the personal pages of other users. In addition, each company is not able to view the personal page of each user, either.

The personal page 900 contains, for example, a loan-related information display area 901 for displaying information on offered loans, a goods sales/service-related information display area 902 for displaying information on offered goods or services, and an advertisement-related information display area 903 for displaying a recommended advertisement for the user.

The loan-related information display area 901 contains, for example, a loan company field 9011 for displaying the name or identification information of a financial company that offers a loan, a loan amount field 9012, a period field 9013 for displaying a loan period, an annual interest field (%) 9014, a repayment method field 9015, an estimated valid period field 9016 for displaying by when an answer as to whether to receive the loan (i.e., offer) or not should be replied, and an acceptance field 9017 that is an area where a radio button is provided for the user to enter information as to whether to receive the offer or not. For example, if the user has not entered information (i.e., YES or NO) into the acceptance field 9017 by one week before the deadline set in the estimated valid period field 9016, the management server 20 may send a reminder to the portable terminal 10_k of the user to enter information into the acceptance field 9017. In addition, when the estimated valid period 9016 is over, for example, the offer of the relevant loan may be automatically erased from the personal page 900 of the user.

The goods sales/service-related information display area 902 contains, for example, a sales company field 9021 for displaying the name or identification information of a sales company or a service providing company, a goods/service field 9022 for displaying the contents of goods or services, a price field 9023 for displaying the prices of goods or services, a payment condition field 9024, an annual interest (%) field 9025 for displaying interests for installment payments, an estimated valid period field 9026 for displaying by when an answer as to whether to accept the sales offer or not should be replied, an image field 9027 for displaying an image related to the goods or services or a location to be accessed for the goods or services, a specific URL field 9028 for displaying the URL for accessing a page that shows the details of the goods or services, and an acceptance field 9029 that is an area where a radio button is provided for the user to enter information as to whether to accept the offer or not.

The advertisement-related information display area 903 includes, for example, a recommended advertisement field 9031 for displaying the name or identification information of a company that provides goods or services that have been determined to be best for a target user by an advertisement company, a goods/service field 9032 for displaying goods or services introduced by the advertisement, an image field 9033 for displaying an image related to the goods or services or a location to be accessed for the goods or services, and a specific URL field 9034 for displaying the URL to access a page that shows the details of the goods or services. For a recommended advertisement, an estimated valid period is not set because the recommended advertisement is not an offer, unlike goods sales or loads, for example. However, a predetermined period, such as one month, may be set as the period for displaying the advertisement.

### <Conclusion>

(i) The present embodiment discloses a characteristic configuration of a portable terminal. Each of the portable terminals 10_1 to 10_n generates a core account in the portable terminal, executes direct deposit or withdrawal of electronic money to/from the core account or executes electronic payment through the core account using the portable terminal and stores the income and outgo information thereon into the core account, accesses a server of a financial company (e.g., a bank) contracted by the user, sets a link between the core account and the financial account of the user, obtains the income and outgo information on the financial account of the user from the server of the financial company periodically or on an as-needed basis, and stores the income and outgo information into the core account. Then, each of the portable terminals 10_1 to 10_n sends the individual rating score of the user computed on the basis of at least such income and outgo information to a management server for managing a service site. Each company provides a service on the basis of the individual rating score, and each of the portable terminals 10_1 to 10_n obtains information on the provided service by accessing the management server. As described above, personal information (i.e., information that can identify individuals) as information on users is not disclosed to each company at all, and the company is able to view only individual rating scores that are not related to the personal information at all. Therefore, users (i.e., consumers) are able to securely perform electronic commerce transactions with companies. That is, an individual rating score is an evaluation value computed on the basis of personal information but is not the personal information itself. Therefore, an individual (i.e., user) corresponding to the score cannot be identified even when the score is seen or analyzed. Accordingly, there is no problem for the user even if the individual rating score is disclosed.
   An individual rating score may be computed using not only income and outgo information on the core account of a user and income and outgo information on the financial account of the user but also information on purchase of goods executed by the user via a shopping application, exercise record information of the user recorded by an exercise record application, and information on the friendship status of the user held by an SNS application. Besides, the individual rating score may also be computed using the healthcare information of the user (which includes information on the body height, body weight, blood pressure, eyesight, past medical history, and chronic disease), medication information, personnel information (e.g., age, academic background, business career, and annual income), own asset information (e.g., movables, real estates, and valuable securities), travel information (e.g., travel route, place of stay, and duration of stay obtained by GPS), and information on the living area of the residential zone of the user estimated on the basis of the travel information. As described above, computing an individual rating score using various types of information can represent the characteristics of a user, which cannot be known from financial information alone, as a score and thus can rate the user more accurately.
(ii) The present embodiment also discloses a characteristic configuration of a service providing system. The service providing system 1 includes the management server 20 of the company that manages a service site for providing various services to users, the portable terminals 10_1 to 10_n that compute the aforementioned individual rating scores of users and send them to the management server 20, and servers of various companies (e.g., the servers 30_1 to 30_n of the loan providing companies 1 to n, the servers 40_1 to 40_n of the online sales companies 1 to n, the servers 50_1 to 50_n of the service-A-providing companies 1 to n, the servers 60_1 to 60_n of the service-Z-providing companies 1 to n, and the servers 70_1 to 70_n of the advertisement delivery companies 1 to n) that upload offers to provide services or goods to users to the management server 20. In the system, the management server 20 discloses the individual rating scores of users without disclosing the personal information of the users on the service site, and permits access to the individual rating scores from a server of each company. Then, the server of each company accesses a company's dedicated page on the service site created by the management server 20, and obtains the individual rating score of each user. In addition, each company determines the content of a service or goods to be provided to the user on the basis of the obtained individual rating score, and sends an offer to provide the service or goods to the management server 20 via the server of each company. Accordingly, since an offer of the services or goods can be provided on the basis of the reliable individual rating score for each company, secure transactions can be performed. For example, each of the loan providing companies 1 to n provides an offer of a loan service in accordance with the individual rating score. Each of the online sales companies 1 to n introduces a group of goods (including an offer) in accordance with the individual rating score. The services-A-to-Z-providing companies provide offers of services A to Z in accordance with the individual rating score. Each of the advertisement delivery companies 1 to n selects an advertisement in accordance with the individual rating score (e.g., an evaluation value of a taste or preference included in the score) and provides the advertisement. It should be noted that each company differs in its method of evaluating individual rating scores, and thus, the content of an offer to be provided by each company is also different. Therefore, the user is able to compare various offers with one another and select the offer that appears to be the most preferable.
   The management server 20, upon receiving an offer to provide services or goods from a server of a company, notifies the portable terminal 10_k of the target user that there has been an offer from some company. As a notification method, for example, it is considered to use a configuration in which the management server 20 registers the content of the offer in the user's dedicated personal page on the service site, and notifies the portable terminal 10_k of the user that the information on the personal page has been updated, but the method is not limited thereto. Then, the management server 20 checks if the user concludes a contract with the company, and, after checking that the user has concluded a contract with the company (e.g., the user has accepted the offer using the radio button on his/her personal page), provides services or goods to the user, and also provides security information of the user to the server of the company in return for the services or goods (i.e., the security information herein is, for example, information on the debit account for payment of communication charges of the user that is configured to allow the communication charges to be withdrawn by a telecommunications company contracted by the user for the portable terminal; the server of the company can withdraw the fees of services or goods by accessing the debit account for payment of the communication charges of the user). At this stage, the personal information of the user is disclosed to the relevant company (which excludes advertisement delivery companies) for the first time. Since the relevant company can obtain the security information at the last stage, security of transactions can be guaranteed.
(iii) The function of the present embodiment can also be realized by a program code of software. In such a case, a storage medium having recorded thereon the program code is provided to a system or an apparatus, and a computer (or a CPU or a MPU) in the system or the apparatus reads the program code stored in the storage medium. In this case, the program code itself read from the storage medium implements the function of the aforementioned embodiment, and the program code itself and the storage medium having recorded thereon the program code constitute the present embodiment. As the storage medium for supplying such a program code, for example, a flexible disk, CD-ROM, DVD-ROM, a hard disk, an optical disc, a magneto-optical disc, CD-R, a magnetic tape, a nonvolatile memory card, ROM, or the like is used.

Further, based on an instruction of the program code, an OS (operating system) running on the computer or the like may perform some or all of actual processes, and the function of the aforementioned embodiment may be implemented by those processes. Furthermore, after the program code read from the storage medium is written to the memory in the computer, the CPU or the like of the computer may, based on the instruction of the program code, perform some or all of the actual processes, and the function of the aforementioned embodiment may be implemented by those processes.

Moreover, the program code of the software that implements the function of the embodiment may be distributed via a network, and thereby stored in storage means such as the hard disk or the memory in the system or the apparatus, or the storage medium such as CD-RW or CD-R, and at the point of use, the computer (or the CPU or the MPU) in the system or the apparatus may read the program code stored in the storage means or the storage medium and execute the program code.

Finally, it should be appreciated that the process and technology described herein may be implemented substantially by any suitable combination of components without being related to a specific device. Further, various types of general-purpose devices can be used in accordance with the teaching described herein. It may be found to be advantageous to construct a dedicated device to execute the steps of the method described herein. In addition, various inventions can be formed by appropriately combining a plurality of components disclosed in the embodiment. For example, some of the components shown in the embodiment may be removed. Further, the components in different embodiments may be appropriately combined. Although the present embodiment has been described with reference to specific examples, such examples are shown not for limiting purposes but for explanation purposes in all aspects. Those skilled in the art may appreciate that there are a number of combinations of hardware, software, and firmware that are suitable for implementing the present embodiment. For example, the software described herein may be implemented by an assembler or a wide range of programs or script languages such as C/C++, perl, Shell, PHP, or Java (registered trademark).

Further, in the aforementioned embodiments, the control lines and information lines represent those that are considered to be necessary for description purposes, and do not necessarily represent all control lines and information lines for a product. In practice, almost all structures may be mutually connected.

It should be noted that the present disclosure is not limited to the aforementioned embodiments, and includes various modified examples. For example, although the aforementioned embodiments have been described in detail to clearly illustrate the present disclosure, the present disclosure need not include all of the structures described in the embodiments.

- 1: Service providing system
- 10_1 to 10_n (10_k): Portable terminals
- 20: Management server
- 30_1 to 30_n: Servers of loan companies
- 40_1 to 40_n: Servers of online sales companies
- 50_1 to 50_n: Servers of service-A-providing companies
- 60_1 to 60_n: Servers of service-Z-providing companies
- 70_1 to 70_n: Servers of advertisement delivery companies
- 80_1 to 80_n: Servers of contracted financial companies
- 90_1 to 90_n: Servers of telecommunications companies
- 100: Network

## Claims

1. A portable terminal device comprising:
a communication unit used to access a network;
a storage unit that stores various programs; and
a processor that reads a predetermined program from the storage unit and executes the program,
wherein:
the processor is configured to execute:
setting a core account within the storage unit of the portable terminal device,
accessing a server of a financial company contracted by a user of the portable terminal device using the communication unit, and setting a link between the core account and a financial account of the user provided in the financial company,
obtaining from the server of the financial company income and outgo information on the financial account of the user, and storing the income and outgo information into the core account,
computing an individual rating score of the user on the basis of at least the income and outgo information,
sending the computed individual rating score to a management server for managing a predetermined service site, and
accessing the management server to obtain information on a service to be provided on the basis of the individual rating score.

2. The portable terminal device according to claim 1, wherein the processor is configured to manage direct withdrawal of money from the core account and direct deposit of money into the core account.

3. The portable terminal device according to claim 1, wherein the processor is further configured to execute setting a link between the core account and a debit account for payment of communication charges.

4. The portable terminal device according to claim 1,
wherein:
the processor is further configured to execute
setting a link between the core account and a shopping application, and
obtaining information on purchase of a good conducted by the user via the shopping application, and storing the information into the core account, and
the processor is further configured to, in computing the individual rating score, compute the individual rating score using the information on the purchase of the good.

5. The portable terminal device according to claim 1,
wherein:
the processor is further configured to execute:
setting a link between the core account and an exercise record application that records exercise performed by the user, and
obtaining information on an exercise record of the user recorded by the exercise record application and storing the information into the core account, and
the processor is further configured to, in computing the individual rating score, compute the individual rating score using the information on the exercise record.

6. The portable terminal device according to claim 1,
wherein:
the processor is further configured to execute:
setting a link between the core account and an SNS application, and
obtaining information on a friendship status of the user held by the SNS application and storing the information into the core account, and
the processor is further configured to, in computing the individual rating score, compute the individual rating score using the information on the friendship status of the user.

7. A service providing system comprising:
the portable terminal device according to claim 1;
the management server that provides the service site; and
a server of a company that uploads to the service site of the management server information on a service or good of the company to be provided to the user,
wherein:
the management server discloses the individual rating score of the user without disclosing personal information of the user on the service site, and permits access to the individual rating score from the server of the company, and
the server of the company accesses the management server to obtain the individual rating score of the user, determines a content of a service or good to be provided to the user on the basis of the individual rating score, and sends to the management server an offer to provide the service or good.

8. The service providing system according to claim 7, wherein the management server, upon receiving the offer to provide the service or good from the server of the company, checks if the user concludes a contract with the company, and after checking that the user has concluded a contract with the company, provides the service or good to the user and also provides security information of the user to the server of the company in return for the service or good.

9. The service providing system according to claim 8,
wherein:
the server of the company includes a server of a loan company, and
the server of the loan company sends to the management server a loan condition for the user determined on the basis of the individual rating score of the user.

10. The service providing system according to claim 8,
wherein:
the server of the company includes a server of an online service providing company, and
the server of the online service providing company sends to the management server information on a tangible or intangible good or service for the user determined on the basis of the individual rating score of the user.

11. The service providing system according to claim 7,
wherein:
the server of the company includes a server of an advertisement delivery company,
the server of the advertisement delivery company sends to the management server information on an advertisement targeted for the user determined on the basis of the individual rating score of the user, and
the management server provides the information to the targeted user so as to allow the information on the advertisement to be viewed only via the portable terminal of the user.

12. The service providing system according to claim 8, wherein the management server provides to the server of the company information that identifies the portable terminal device of the user, with which information on a debit account for payment of communication charges of the user is able to be identified as the security information.

13. The service providing system according to claim 7, wherein the management server sets a user's dedicated page for the user on the service site, and posts the offer to provide the service or good received from the server of the company on the user's dedicated page.

14. The service providing system according to claim 7, wherein the management server sets a company's dedicated page for the company on the service site, and posts the individual rating score of the user stored in the management server on the company's dedicated page.

15. The service providing system according to claim 7, wherein the portable terminal device compares one or more of medical checkup information, own real estate information, and personnel information, that have been entered by the user, with at least one of financial information including income and outgo or balance of an account of the user, consumption information, travel information, exercise information, medication information, and healthcare information, that have been automatically entered by the portable terminal device, and determines if there is any gap or contradiction between the compared information, and then, if there is any gap or contradiction, adjusts the individual rating score by not reflecting the information that has been entered by the user in the individual rating score.

16. The service providing system according to claim 7, wherein the portable terminal device generates the individual rating score by quantifying a value of a living area on the basis of a land price of a residential zone of the user estimated from travel information of the user and deviation values of schools in the residential zone.
